(19) Europäisches Patentamt
European Patent Office
Office européen des brevets

(11) **EP 3 702 875 A1**

(12) **EUROPÄISCHE PATENTANMELDUNG**

(43) Veröffentlichungstag:
**02.09.2020 Patentblatt 2020/36**

(51) Int Cl.:
*G05D 23/19* (2006.01) *F24H 9/20* (2006.01)

(21) Anmeldenummer: **19000105.7**

(22) Anmeldetag: **28.02.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Institut für Solarenergieforschung GmbH**
**31860 Emmerthal (DE)**

(72) Erfinder: **Pärisch, Peter**
**31785 Hameln (DE)**

(54) **VERFAHREN FÜR DIE REGELUNG DER NACHHEIZUNG VON WÄRMESPEICHERN**

(57) Verfahren zum Regeln eines Wärmeversorgungssystems mit einem Wärmespeicher (1), mit mindestens einem Wärmeverbraucher, mit mindestens einem fluktuierenden Wärmeerzeuger (6), mit mindestens einem planbar einsetzbaren Wärmeerzeuger (2), mit einer Regelung (4), an den mindestens ein örtlich-mittelnder Speichertemperatursensor (5, 5a, 5b) angeschlossen ist, wobei die Beladung mit dem planbar einsetzbaren Wärmeerzeuger (2) gestartet wird, wenn der Einschalt-Sollwert von der zugeordneten örtlich-gemittelten Temperatur (5, 5a) unterschritten wird und beendet wird, wenn der Ausschalt-Sollwert von der zugeordneten örtlich-gemittelten Temperatur (5, 5a) überschritten wird, dadurch gekennzeichnet, dass der Regler (4) die Leistungsabgabe des planbar einsetzbaren Wärmeerzeugers (2) während der Beladung so regelt, dass sich die ihm zugeordnete örtlich-gemittelte Temperatur (5, 5a) nicht verändert, also dass die Ableitung nach der Zeit Null ist.

Figur 2

EP 3 702 875 A1

**Beschreibung**

Die Erfindung beansprucht ein Verfahren für die Regelung der Nachheizung von Wärmespeichern mit örtlich-mittelnden Temperatursensoren.

In einem Wärmeversorgungssystem mit einem Wärmespeicher hat man es oft mit mehreren Wärmequellen und Wärmesenken zu tun. Als Wärmequelle ist eigentlich immer eine konventionelle Nachheizung mit einem planbar einsetzbaren Wärmeerzeuger (z. B. Gasbrennwertgerät, Wärmepumpe, Fernwärmeübergabestation) vorhanden. Diese werden im Folgenden "planbar einsetzbare Wärmeerzeuger" genannt. Ist nur ein Wärmeerzeuger vorhanden spricht man von monovalenten Speichern.

Hinzu kommen häufig so genannte "fluktuierende Wärmeerzeuger", wie z. B. thermische Solaranlagen, Überschussstromnutzung von Photovoltaikanlagen mit Heizstab oder auch handbeschickte Kaminöfen, deren Wärmeeintrag aus Sicht der Nachheizregelung nicht planbar, allenfalls prognostizierbar, ist. Fluktuierende Wärmeerzeuger genießen in der Regel einen Vorrang gegenüber den planbar einsetzbaren Wärmeerzeugern, weil ihre Wärmebereitstellung kostengünstiger (nur Betriebskosten betrachtet) und umweltfreundlicher erfolgt. Im Fall von zwei Wärmeerzeugern spricht man von bivalenten Speichern, bei mehr als zwei Wärmeerzeugern von multivalenten Speichern.

Aufgrund des hohen Leistungsbedarfs der Trinkwarmwasserbereitstellung wird diese normalerweise am Wärmespeicher angeschlossen. Entweder handelt es sich beim Wärmespeicher um einen Brauchwasserspeicher, in dem direkt das Trinkwarmwasser bevorratet wird, oder um einen Pufferspeicher, in dem die Wärme für einen Durchfluss-Trinkwassererwärmer im Medium Heizungswasser gespeichert wird. Die Trinkwarmwasserlast ist auch fluktuierend, aber relativ gut prognostizierbar. Zur Erreichung einer hohen Trinkwarmwasserdarbietung wird normalerweise der gesamte Speicherbereich genutzt. Also erfolgt ganz oben die Warmwasserentnahme und ganz unten der Kaltwassereintritt. Bei bi- oder multivalenten Wärmespeichern gibt es in der Regel einen Speicherbereich, der auf Bereitschaftstemperatur für die Trinkwarmwasserlast gehalten wird (Bereitschaftsteil oder Bereitschaftsvolumen genannt). In häuslichen Anwendungen weist der Bereitschaftsteil die höchste Temperatur auf und befindet sich folglich im oberen Speicherbereich.

Die Heizungskreisläufe können auch an den Speicher angeschlossen sein, in der Regel unterhalb des Bereitschaftsvolumens, und sind weniger fluktuierend als die Trinkwarmwasserlast. Lediglich aus didaktischen Gründen werden im Folgenden reine Brauchwasserspeicher betrachtet.

Die Nachheizung von Wärmespeichern durch planbar einsetzbare Wärmeerzeuger wird gemäß dem Stand der Technik über einen Temperatursensor geregelt. Ein Temperatursensor wird mittels Tauchhülse im Wärmespeicher oder auf dessen Oberfläche platziert und mit mindestens einem am Regler eingestellten Sollwert verglichen. Der Temperatursensor misst die Temperatur folglich punktuell, korrespondierend mit der Speichertemperatur auf dieser Höhe. Bei Unterschreiten des Sollwerts wird die Nachheizung gestartet, indem beispielsweise eine Umwälzpumpe heißeres Wasser oberhalb des Temperatursensors in den Wärmespeicher pumpt (Vorlauf) und kälteres Wasser unterhalb des Temperatursensors absaugt und dem Wärmeerzeuger zuführt (Rücklauf). Dies ist analog mit im Speicher integrierten Wärmeübertragern (Rohrwendel) möglich. Befindet sich oberhalb des Temperatursensors wärmeres Wasser ist die Abschaltbedingung der Nachheizung innerhalb weniger Sekunden erfüllt und der Wärmeerzeuger wird abgeschaltet.

Gemäß dem Stand der Technik wird zur Vermeidung von häufigem Takten des Wärmeerzeugers mit einer Temperaturhysterese im Regler gearbeitet. Dies entspricht zwei Sollwerten für die punktuelle Temperatur. Beim niedrigeren Sollwert (z. B. 60 °C) startet der Regler die Nachheizung und beim Erreichen des höheren Sollwerts (z. B. 65 °C) beendet der Regler die Nachheizung. Dies entspricht von der Logik einem Sollwert von z. B. 60 °C einer Temperaturhysterese von 5 K (=Kelvin). Im Folgenden wird aus didaktischen Gründen von einem unteren und einem oberen Sollwert gesprochen. Bei Wärmespeichern, die eine geringe Durchmischung, also eine gute Temperaturschichtung aufweisen, existiert eine relativ stark ausgeprägte Abhängigkeit der Temperatur über der Höhe und auch bei Verwendung der 2-Punkt-Regelung (zwei Sollwerte) kann es zu häufigem Takten kommen.

Zur weiteren Reduktion der Takthäufigkeit ist es bekannt, die Nachheizung mit zwei, in unterschiedlichen Höhen am oder im Wärmespeicher platzierten, Temperatursensoren zu regeln. Hierbei werden die beiden Sollwerte auf beide Temperatursensoren angewendet und mit UND logisch verknüpft. Das heißt, die Nachheizung wird gestartet, wenn beide gemessenen Temperaturen den unteren Sollwert (z. B. 60 °C) unterschreiten und beendet, wenn beide gemessenen Temperaturen den oberen Sollwert (z. B. 65 °C) überschreiten. Nachteilig hieran ist, dass zwei Temperatursensoren und am Regler zwei Eingänge für Temperatursensoren benötigt werden. Dies verursacht Kosten, die dazu führen, dass diese Methode sich nicht in großen Stückzahlen durchgesetzt hat. Ebenso ist die Fehleranfälligkeit durch Bedienfehler am Regler oder durch Vertauschen der Eingänge zu erwähnen.

Bekannt ist es zudem, die Temperatursollwerte innerhalb eines bestimmten Zeitfensters abzusenken, zum Beispiel nachts oder im Urlaub.

Einige Regler für thermische Solaranlagen unterdrücken die Nachheizung durch den planbar einsetzbaren Wärmeerzeuger, zum Beispiel durch externe Vorgabe des Sollwerts oder des Modulationsgrads via digitalem (z. B. Busverbindung) oder analogem Signal (z. B.

0-10 V) an dessen Regler. Gebräuchlich ist es, die Nachheizung bis zum Erreichen eines dritten Temperatursollwerts (im Folgenden Temperaturgrenze genannt, z. B. 45 °C) zu unterdrücken, wenn der Speicher durch die Solaranlage beladen wird. Bevorzugt steuert ein Systemregler die Solaranlage und den Heizkessel, so dass Probleme bei der Kommunikation (verschiedene Standards, Interpretationsspielräume) zwischen zwei verschiedenen Reglern unterbunden werden.

Weiterhin ist es bekannt, Widerstandsthermometer in Reihe zu schalten, um eine örtliche Mittelung an diskreten Stellen durchzuführen. WO 88/05160A1 und DE 10 2005 001379 beschreiben die Anwendung auf oder in einem Wärmespeicher zur Ermittlung der gespeicherten Wärme, also des Energieinhalts. US 6 592 254 beschreibt auch Anordnungen, wo die Einzelwiderstände in Reihe und parallelgeschaltet sind. Auch ist bekannt einen Widerstandsdraht auf einen örtlich ausgedehnten Träger zu wickeln und so eine kontinuierliche Mittelung zu erreichen (vgl. DE 09 19 26 191 für die Anwendung im Backofen). DE 38 43 233 C2 beschreibt eine Methode die örtlich-mittelnde Wirkung, zum Beispiel abhängig von der zu erwartenden Strömungsgeschwindigkeit, zu gewichten. Dazu wird der Widerstandsdraht bzw. der Dickschichtwiderstand in Schleifen unterschiedlichen Abstands gelegt. Für die Anwendung in Luftkanälen, die generell eine höhere räumliche Ausdehnung aufweisen, gibt es noch viele Lösungen für die Gestaltung der Sensoren, die jedoch nicht alle genannt werden können. Zudem gibt es viele Dokumente, die die Verwendung der örtlich mittelnden Sensoren beschreiben (wie zum Beispiel EP3214420). US2015285690 und US2013173205 beschreiben wie ein solcher Sensor genutzt werden kann, um verschiedene Ereignisse am Speicher zu detektieren. Ein steiler Abfall deutet auf eine Zapfung hin. EP 2715298 beschreibt eine Regelung, wobei der Energieinhalt mit einer oberen und unteren Grenze verglichen wird und daraus ein Ladezustand abgeleitet wird.

In der wassergeführten Heizungstechnik haben sich örtlich mittelnde Temperatursensoren nicht etabliert, weil der Mehrpreis für einen solchen Sensor durch eine ausgefeilte Regelung wieder eingespart werden muss. Solch eine ausgefeilte Regelung wird im Folgenden beschrieben.

Der vorliegenden Erfindung liegt die Aufgabe zugrunde, mit möglichst geringem messtechnischem Aufwand einen möglichst effizienten Betrieb eines Wärmeversorgungssystems mit einem Wärmespeicher, mit mindestens einem Wärmeverbraucher, mit mindestens einem planbar einsetzbaren Wärmeerzeuger, mit mindestens einem fluktuierenden Wärmeerzeuger und einer Regelung bzw. einem Regler, an die mindestens ein örtlich-mittelnder Temperatursensor angeschlossen wird, zu erreichen. Die Beladung durch den planbar einsetzbaren Wärmeerzeuger wird gestartet, wenn der Einschalt-Sollwert von zum Beispiel 60 °C unterschritten wird und beendet, wenn der Ausschalt-Sollwert von z. B.

65 °C überschritten wird. Der erfindungsgemäße Gedanke von **Anspruch 1** ist, dass die Leistung des planbar einsetzbaren Wärmeerzeugers so moduliert wird, dass sich die örtlich-gemittelte Temperatur nicht ändert, also ihre zeitliche Ableitung Null ist.

Dadurch wird erreicht, dass die örtlich-gemittelte Temperatur auf Niveau des Einschalt-Sollwerts oder zumindest zwischen Ein- und Ausschalt-Sollwert bleibt. Das Erreichen der Ausschalt-Bedingung wird möglichst lange hinausgezögert. Für das Wärmeversorgungssystem ergibt sich der Vorteil, dass die Takthäufigkeit des planbar einsetzbaren Wärmeerzeugers reduziert wird. Die Speichertemperatur stabilisiert sich auf etwas niedrigerem Niveau, was die thermischen Verluste reduziert, und die Temperaturschichtung wird durch den angepassten Volumenstrom auf Erzeuger- und Verbraucherseite verbessert.

Die Leistung des Wärmeerzeugers wird der Leistung des Wärmeverbrauchers angepasst. Dadurch wird, bezogen auf das Bereitschaftsvolumen, eine Gleichheit der eingespeisten und der entnommenen Leistung erreicht, ohne die sonst üblichen drei Messwerte (Volumenstrom, Vorlauf- und Rücklauftemperatur) aufnehmen zu müssen. Bei bivalenten Speichern ist eine Messung der, auf das Bereitschaftsvolumen bezogenen, entnommenen Leistung schwer möglich, weil die Temperatur unter dem Bereitschaftteil gemessen werden müsste. Die tatsächlich dem Bereitschaftsvolumen entnommene Leistung, ist kleiner als die Leistung des Verbrauchers.

$$\dot{Q}_{in} - \dot{Q}_{out} = c \cdot V \cdot \frac{dT}{dt} = 0$$

Die Betriebsweise sorgt dafür, dass mit der mindestens notwendigen thermischen Leistung beladen wird. Ist die minimale thermische Leistung des planbar einsetzbaren Wärmeerzeugers größer als die entnommene Wärmeleistung, so wird beim Erreichen des oberen Sollwerts abgeschaltet.

Anspruch 1 und die folgenden können mit den Standard-Regelungsfunktionen wie Absenkung der Sollwerte während Urlaub, nachts oder bei Abwesenheit sowie Anhebung der Sollwerte als Partyfunktion kombiniert werden. Auf sie wird nicht weiter eingegangen, da sie als naheliegend erachtet werden.

Die Bauweise der örtlich-mittelnden Temperatursensoren ist für die beanspruchten Regelungsverfahren irrelevant. Im einfachsten Fall kann dazu eine Reihenschaltung von wenigstens zwei Widerstandsthermometern verwendet werden. Beispielsweise können zwei Platin-Widerstandsthermometer mit einem Widerstand von 500 Ω (=Pt500) zu einem örtlich-mittelnden Pt1000 verbunden werden. Analog ist dies mit 10·Pt100 zu einem Pt1000 möglich.

Diese Messmethode misst an mindestens 2 Stellen punktuell und mittelt die Temperaturen arithmetisch (im Folgenden diskrete Mittelung genannt). Je mehr Punkte für die Mittelung verwendet werden, desto genauer ist die Mittelwertbildung und desto feiner ist die Auflösung. Alternativ zu dieser diskreten Mittelung ist auch eine kontinuierliche Mittelung denkbar, indem ein dünner Draht oder eine Beschichtung auf einem Trägermaterial verwendet wird. Dadurch wird eine genauere Mittelung und eine höhere Auflösung über eine bestimmte Höhe des Wärmespeichers erreicht. Beide Lösungen werden im Folgenden als örtlich-mittelnde Temperatursensoren bezeichnet, der Messwert als örtlich-gemittelte Temperatur.

In einer vorteilhaften Ausgestaltung nach Anspruch 2 kennt der Regler das vom örtlich-gemittelten Temperatursensor erfasste Speichervolumen *V* und dessen Wärmekapazität *c* (z. B. ein Eingabewert) und errechnet aus der zeitlichen Ableitung den thermischen Leistungsbedarf, wenn der Wärmeerzeuger noch aus ist.

$$\dot{Q}_{out} = -c \cdot V \cdot \frac{dT}{dt}$$

Dieser Wert eignet sich als Startwert für die thermische Leistung des planbar einsetzbaren Wärmeerzeugers, so dass die Regelung nach Anspruch 1, nämlich auf eine zeitliche Ableitung der Temperatur von Null, schneller und besser funktioniert.

In einer bevorzugten Ausgestaltung nach Anspruch 3 wird die Beladung des Speichers durch den planbar einsetzbaren Wärmeerzeuger abgebrochen, wenn, noch vor Erreichen des Ausschalt-Sollwerts durch die zugeordnete örtlich-gemittelte Temperatur, die Eintrittstemperatur in den Wärmespeicher (Vorlauftemperatur des fluktuierenden Wärmeerzeugers) oder die örtlich-gemittelte Temperatur des fluktuierenden Wärmeerzeugers den Einschalt-Sollwert überschreitet. In diesem Fall ist dem fluktuierenden Wärmeerzeuger ein Vorrang einzuräumen und es ist davon auszugehen, dass dieser den Wärmebedarf zunächst selbst deckt.

In einer bevorzugten Ausgestaltung nach Anspruch 4 ist vorgesehen, dass trotz Vorliegen der Einschaltbedingung des planbar einsetzbaren Wärmeerzeugers die Beladung unterdrückt wird, wenn der extrapolierte Temperaturverlauf des fluktuierenden Wärmeerzeugers eine einstellbare Temperaturgrenze (z. B. 45 °C) vorher erreicht als der extrapolierte Temperaturverlauf des planbar einsetzbaren Wärmeerzeugers.

Diese Funktion dient der Unterdrückung der Nachheizung durch den planbar einsetzbaren Wärmeerzeuger, wenn der fluktuierende Wärmeerzeuger in absehbarer Zeit den Wärmebedarf decken kann.

In einer vorteilhaften Ausgestaltung nach Anspruch 5 ist vorgesehen, dass der Regler selbsttätig die Temperaturgrenze (z. B. 45 °C) zwischen dem Einschalt-Sollwert und dem Einstellwert der Temperaturgrenze verschiebt. Dazu nutzt der Regler sinnvollerweise die Prognosen des Wärmelastgangs sowie der Wärmeeinspeisung durch den fluktuierenden Wärmeerzeuger. Handelt es sich um eine Solaranlage und einen Trinkwarmwasserspeicher ist es beispielsweise sinnvoll, die Speicherbeladung durch den planbar einsetzbaren Wärmeerzeuger nach den morgendlichen Duschen zu unterdrücken, also die Temperaturgrenze auf dem Einstellwert (z. B. 45 °C) zu belassen. Das gibt der Solaranlage die Möglichkeit, eine größere Wärmemenge in den Speicher einzutragen. Nachts oder bei prognostiziert schlechtem Wetter kann die Temperaturgrenze auf den Einschalt-Sollwert (z. B. 60 °C) erhöht werden. Ist hingegen von sonnigem Wetter auszugehen, so kann die Beladung durch Verwenden des Einstellwerts der Temperaturgrenze (z. B. 45 °C) verzögert werden.

Alternativ dazu ist in Anspruch 6 vorgesehen, dass die Beladung durch den planbar einsetzbaren Wärmeerzeuger trotz Unterschreitens des Einschalt-Sollwerts durch seine örtlich-gemittelte Temperatur (5a) ausgesetzt wird, wenn erstens die örtlich-gemittelte Temperatur des fluktuierenden Wärmeerzeugers die Temperaturgrenze überschritten hat und zweitens die Steigung der örtlich-gemittelten Temperatur (5b) des fluktuierenden Wärmeerzeugers (6) größer als Null ist, und drittens die örtlich-gemittelte Temperatur (5a), die dem planbar einsetzbaren Wärmeerzeuger zugeordnet ist, noch nicht eine einstellbare Temperaturgrenze erreicht hat.

In einer bevorzugten Ausgestaltung der Erfindung nach Anspruch 7 ist vorgesehen, dass die örtlich-gemittelten Temperaturen mit Hilfe von Wärmekapazität und Speichervolumen in gespeicherte Wärme umgerechnet werden, dass die zugeführten Wärmeleistungen der Wärmeerzeuger gemessen werden, dass die Wärmeabgabeleistung an die Verbraucher aus der Differenz zwischen den zugeführten Wärmeleistungen und der zeitlichen Ableitung der gespeicherten Wärme im gesamten Speicher berechnet wird, um daraus eine zeitliche Prognose des Lastgangs abzuleiten, und dass die Nachheizung unterdrückt wird, wenn kein Wärmebedarf prognostiziert wird.

Wenn in der Regelung das zum jeweiligen Sensor gehörige Speichervolumen *V* und die Wärmekapazität c eingegeben werden, kann die Regelung die gespeicherte Wärme berechnen. Damit ist es möglich, eine der Regelung unbekannte Wärmeleistung zu berechnen. Wenn zum Beispiel die erzeugte Wärmeleistung $\dot{Q}_{in}$ bekannt ist und die Änderung der gespeicherten Wärme abgezogen wird, so ist es möglich die Wärmeentnahmeleistung $\dot{Q}_{out}$ an die Verbraucher zu berechnen und sie zu Prognosezwecken zu verwenden. Dies ergibt Sinn, wenn die Regelung dem Wärmeerzeuger zugeordnet ist und die Wärmeverbraucher nicht gemessen werden können oder sollen.

$$\dot{Q}_{out} = \dot{Q}_{in} - c \cdot V \cdot \frac{dT}{dt}$$

Die Lastprognose wird sinnvollerweise dafür verwendet, die Nachheizung zu unterdrücken, wenn kein Wärmebedarf prognostiziert wird, um dem fluktuierenden Wärmeerzeuger die Möglichkeit zur Einspeisung zu ermöglichen.

Die Ansprüche sind im Sinne von Wärmeerzeugern, Wärmespeichern und Wärmeverbrauchern erläutert. Sie sind invers auch für Kältespeicher, Kälteverbraucher und Kälteerzeuger anwendbar. Darauf wird aus Gründen der Lesbarkeit nicht näher eingegangen, sie sind jedoch explizit hiermit offenbart.

Anspruch 8 beansprucht ein Wärmeversorgungssystem mit einem Wärmespeicher (1), mit mindestens einem Wärmeverbraucher, mit mindestens einem fluktuierenden Wärmeerzeuger (6), mit mindestens einem planbar einsetzbaren Wärmeerzeuger (2), mit einer Regelung (4), an den mindestens ein örtlich-mittelnder Speichertemperatursensor (5, 5a, 5b) angeschlossen ist, wobei die Beladung mit dem planbar einsetzbaren Wärmeerzeuger (2) gestartet wird, wenn der Einschalt-Sollwert von der zugeordneten örtlich-gemittelten Temperatur (5, 5a) unterschritten wird und beendet wird, wenn der Ausschalt-Sollwert von der zugeordneten örtlich-gemittelten Temperatur (5, 5a) überschritten wird, dadurch gekennzeichnet, a) dass der Regler (4) die Leistungsabgabe des planbar einsetzbaren Wärmeerzeugers (2) während der Beladung so regelt, dass sich die ihm zugeordnete örtlich-gemittelte Temperatur (5, 5a) nicht verändert, also dass die Ableitung nach der Zeit Null ist.

Ein solches Wärmeversorgungssystem kommt sinnvollerweise als Paketlösung von einem Systemanbieter, so dass die verschiedenen Regelungen miteinander kommunizieren können. Ein weiterer Vorteil ergibt sich dadurch, dass Speichervolumen und Wärmekapazität der Baugruppe zugeordnet werden können, so dass der Handwerker die Werte nicht auf Basis von Unterlagen ausrechnen muss. Die Anwendung der weiteren Verfahrens-Unteransprüche ist naheliegend.

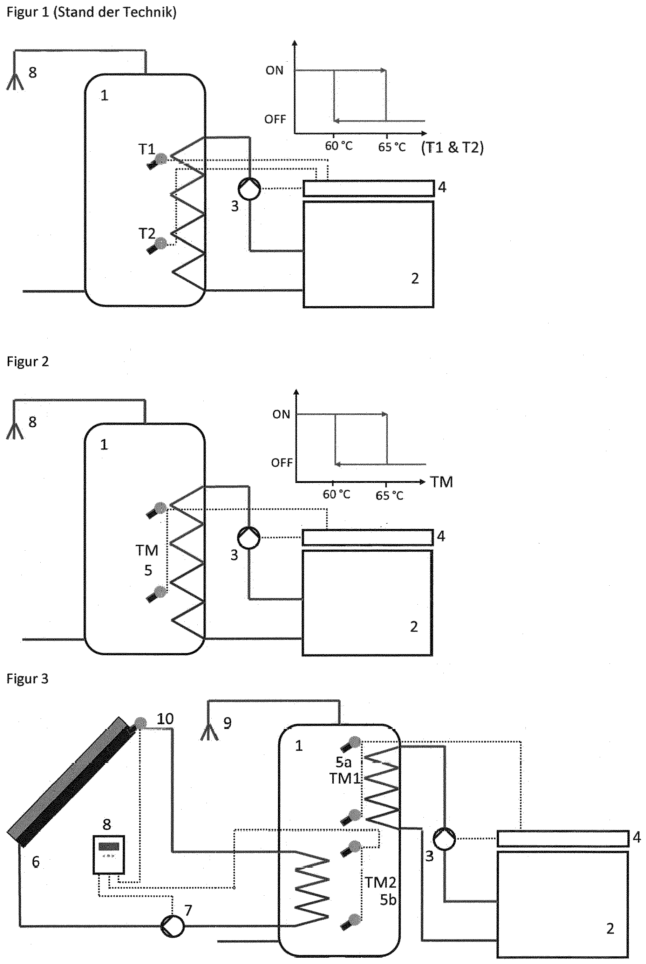

Figur 1 stellt den Stand der Technik anhand eines monovalenten Trinkwarmwasserspeichers (1) mit einem planbar einsetzbaren Wärmeerzeuger (2) und einem Wärmeverbraucher (9) dar. An die Regelung (4) des planbar einsetzbaren Wärmeerzeugers (2) sind zwei, in verschiedenen Höhen am Speicher (1) angebrachte Temperatursensoren (T1 und T2) und eine Umwälzpumpe (3) angeschlossen. Wenn beide Temperaturen einen Einschalt-Sollwert (z. B. 60 °C) unterschreiten, wird die Beladung gestartet. Das heißt, der planbar einsetzbare Wärmeerzeuger erhitzt seinen Wasserinhalt auf über Solltemperatur und dann wird die Umwälzpumpe (3) aktiviert. Wenn beide Temperaturen einen Ausschalt-Sollwert (z. B. 65 °C) überschreiten, endet die Beladung. Diese nicht sehr verbreitete, aber in der Literatur bekannte Methode reduziert die Schalthäufigkeit des Wärmeerzeugers, allerdings benötigt sie zwei Eingänge am Regler und ist aufwändiger zu erläutern. Beides verursacht Kosten.

Die gleiche Wirkung lässt sich gemäß Figur 2 mit einem örtlich-mittelnden Temperatursensor (5) realisieren. Es wird nur ein Messeingang verbraucht und die Temperaturanzeige am Gerät ist kompakt möglich. Allerdings geht durch die Mittelwertbildung die Höhenverteilung der Speichertemperatur verloren. Die Methode eignet sich vor allem für Wärmeerzeuger, die dem Speicher (1) eine bestimmte Temperatur zuführen können. Wenn der Einschalt-Sollwert unterschritten wird, wird der planbar einsetzbare Wärmeerzeuger aktiviert und die Beladung startet. Wenn der Ausschalt-Sollwert überschritten wird, stoppt die Regelung (4) die Beladung. Die Lösung ist der Patentliteratur zwar bekannt, jedoch in der Praxis nicht anzutreffen.

Figur 3 zeigt einen bivalenten Trinkwarmwasserspeicher (1) mit einer thermischen Solaranlage (6), als Beispiel für einen fluktuierenden Wärmeerzeuger, für die Vorwärmung und einem planbar einsetzbaren Wärmeerzeuger (2) für die Nacherhitzung des Trinkwarmwassers. Beide Wärmeerzeuger verfügen über einen eigenen Regler (4, 8) und einen eigenen örtlich-mittelnden Temperatursensor (5a, 5b), hier exemplarisch als Reihenschaltung von zwei Einzeltemperatursensoren ausgebildet. Erfindungsgemäß wird die thermische Leistungsabgabe des planbar einsetzbaren Wärmeerzeugers derart moduliert, dass die zeitliche Ableitung der ihm zugeordneten örtlich-gemittelten Temperatur ($dTM1/dt$) Null wird. Abhängig vom thermischen Leistungsbedarf des Wärmeverbrauchers (9) und der thermischen Leistung der Solaranlage (6) kann eine ganz unterschiedliche thermische Leistung des planbar einsetzbaren Wärmeerzeugers notwendig sein, um die Bedingung zu erfüllen. Diese Methode verlängert die durchschnittliche Betriebszeit und reduziert die Takthäufigkeit des planbar einsetzbaren Wärmeerzeugers. Insbesondere Wärmepumpen dürfen manchmal nicht öfter als viermal in der Stunde starten und es kann die Drehzahlregelung des Wärmepumpenkompressors genutzt werden, um die thermische Leistung zu modulieren. Häufige Brennerstarts reduzieren die Lebensdauer von konventionellen Öl- oder Gas-Kesseln.

Um die Regelung zu verbessern ist es sinnvoll, einen geeigneten Startwert für die thermische Leistung des planbar einsetzbaren Wärmeerzeugers zu ermitteln. Dazu berechnet die Regelung permanent die Ableitung der örtlich-gemittelten Temperatur (5a) und errechnet durch Multiplikation mit der Wärmekapazität und dem zugeordneten Volumen eine thermische Leistung. Bei abgeschalteter Beladung entspricht diese thermische Leistung den thermischen Verlusten des Speichers zuzüglich etwaigem Leistungsbedarf der Wärmeverbraucher. Bei Vorliegen der Einschaltbedingung ist es mit dieser Methode möglich, den planbar einsetzbaren Wärmeerzeuger direkt mit der benötigten Leistung zu starten. Dies entspricht einer Vorsteuerung und verbessert die Regelung.

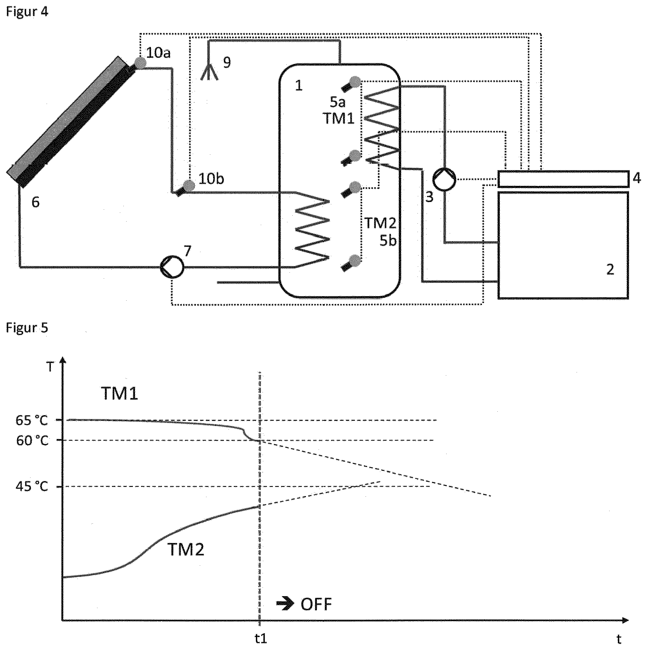

Figur 4 zeigt einen bivalenten Trinkwarmwasserspeicher (1) mit einer thermischen Solaranlage (6) zur Vorwärmung und einen planbar einsetzbaren Wärmeerzeuger (2) zur Nacherwärmung mit einer gemeinsamen Regelung (4), an die Temperatursensoren (5a, 5g, 10) und die Umwälzpumpen (3, 7) angeschlossen sind. Damit ist es möglich die Beladung durch den planbar einsetzbaren Wärmeerzeuger abzubrechen, bevor der Ausschalt-Sollwert erreicht ist. Wenn entweder die Eintrittstemperatur in den Speicher (10b) oder die örtlich-gemittelte Temperatur (5b) des fluktuierenden Wärmeerzeugers (6) den Einschalt-Sollwert überschreitet. Diese Regelung räumt dem fluktuierenden Wärmeerzeuger einen Vorrang ein und geht davon aus, dass er ab diesem Zeitpunkt den Wärmebedarf selbständig decken kann. Näherungsweise kann auch die am Austritt des Solarkollektors gemessene Temperatur (10, 10a) verwendet werden.

Figur 5 verdeutlicht die Temperaturverläufe über der Zeit mit den Hilfslinien (Ausschalt-Sollwert 65 °C, Einschalt-Sollwert 60 °C, Temperaturgrenze 45 °C). Die örtlich-gemittelte Temperatur TM1 kühlt sich ausgehend von 65 °C langsam ab. Dann beginnt eine Zapfung und TM1 kühlt sich schneller ab und fällt beim Zeitpunkt t1 unter den Einschalt-Sollwert. Normalerweise würde jetzt die Regelung (4) die Beladung durch den planbar einsetzbaren Wärmeerzeuger (2) starten, jedoch nicht nach der vorteilhaften Ausgestaltung nach Anspruch 4. Hierbei gibt es eine weitere Temperaturgrenze (z. B. 45 °C), die dann greift, wenn die Regelung (4) einen Anstieg von TM2 erkennt, der vermuten lässt, dass TM2 die Temperaturgrenze früher erreicht als TM1. Das heißt beide Temperaturen TM1 und TM2 werden geeignet in die Zukunft extrapoliert, also prognostiziert. Die Temperaturgrenze markiert die Komfortgrenze, die auf keinen Fall unterschritten werden darf. Aus hygienischen Gründen jedoch sollte der Speicher auf 60 °C gehalten werden. Eine kurzzeitige Absenkung in Ein- und Zweifamilienhäusern ist jedoch tolerierbar. Des Weiteren ist angedacht, dass der Regler (4) die Temperaturgrenze selbsttätig zwischen Einstellwert (z. B. 45 °C) und Einschalt-Sollwert (z. B. 60 °C) variiert. Dies geschieht abhängig von der Lastprognose des Wärmebedarfs sowie von der Prognose der erzeugten Leistung. Zum Beispiel abhängig von der Jahreszeit, der Tageszeit sowie der gestrigen Erträge. Alternativ sind andere Methoden der Prognose (Wetterprognose) denkbar.

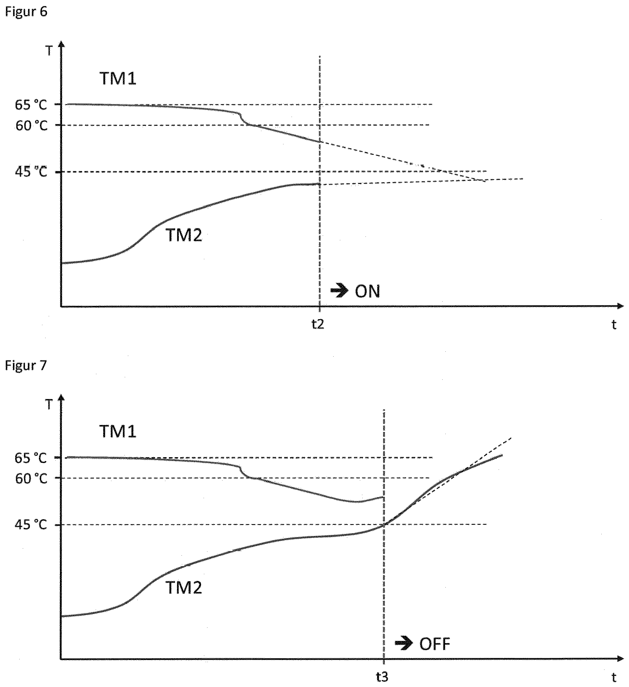

Figur 6 verdeutlicht den Temperaturverlauf zu einem späteren Zeitpunkt t2, wo der Anstieg des TM2 geringer geworden ist. Dies kann zum Beispiel durch einen Wetterwechsel oder eine Vergrößerung des Wärmebedarfs der Verbraucher verursacht werden. Der prognostizierte Verlauf von TM2 erreicht die Temperaturgrenze deutlich später als TM1, so dass in dem Moment die Beladung durch den planbar einsetzbaren Wärmeerzeuger (2) freigegeben wird.

Figur 7 stellt den Fall zum späteren Zeitpunkt t3 dar, wo die Beladung durch den planbar einsetzbaren Wärmeerzeuger abgebrochen wird oder ausgesetzt wird, wenn die örtlich-gemittelte Temperatur TM2 die Temperaturgrenze überschritten hat und eine positive Steigung, also einen Anstieg, aufweist. Dem fluktuierenden Wärmeerzeuger (6) wird also ein Vorrang eingeräumt, um den Speicher zu beladen bzw. den Bedarf zu decken. Das sorgt für höhere solare Deckungsgrade und eine höhere Endenergieeinsparung für den planbar einsetzbaren Wärmeerzeuger.

In den Figuren 5 bis 7 sind exemplarisch lineare Extrapolationen dargestellt, das heißt zum jeweiligen Zeitpunkt ist der Verlauf mit gleichbleibender Steigung in die Zukunft extrapoliert. Die numerische Mathematik kennt weitere, nichtlineare Extrapolationsmethoden, die hier nicht im Einzelnen erwähnt werden müssen. Des Weiteren ist es möglich, den Temperaturverlauf anhand vergangener Tage zu prognostizieren. Dazu wird die Temperatur mit Hilfe von Volumen und Wärmekapazität in eine Wärme umgerechnet. Die Ableitung der gespeicherten Wärme nach der Zeit wird in eine thermische Leistung umgerechnet. Wenn die thermische Leistung des planbar einsetzbaren Wärmeerzeugers bekannt ist, kann mittels Subtraktion ein Lastgang der Verbraucher abgeleitet werden, der für die Prognose verwendet werden kann. Einfache Prognosen setzen beispielsweise den folgenden Tag wie den vergangen Tag an oder nutzen Wochenprofile. Sagt die Prognose keinen Wärmebedarf voraus, wird dem fluktuierenden Wärmeerzeuger ein Vorrang trotz Unterschreitens des Einschalt-Sollwerts eingeräumt. Beispielsweise ist es denkbar, dass morgens geduscht wird und danach die Temperatur unter den Einschalt-Sollwert fällt. Die Regelung weiß, dass nun für einige Stunden nur noch thermische Verluste des Speichers auftreten und ermöglicht durch Unterdrücken der Nachheizung dem fluktuierenden Wärmeerzeuger, den Speicher aufzuheizen. Tritt der Fall jedoch nachts auf, dass der Einschalt-Sollwert unterschritten wird, wird nachgeheizt.

## Patentansprüche

1. Verfahren zum Regeln eines Wärmeversorgungssystems mit einem Wärmespeicher (1), mit mindestens einem Wärmeverbraucher, mit mindestens einem fluktuierenden Wärmeerzeuger (6), mit mindestens einem planbar einsetzbaren Wärmeerzeuger (2), mit einer Regelung (4), an den mindestens ein örtlich-mittelnder Speichertemperatursensor (5, 5a, 5b) angeschlossen ist, wobei die Beladung mit dem planbar einsetzbaren Wärmeerzeuger (2) gestartet wird, wenn der Einschalt-Sollwert von der zugeordneten örtlich-gemittelten Temperatur (5, 5a) unterschritten wird und beendet wird, wenn der Ausschalt-Sollwert von der zugeordneten örtlich-gemittelten Temperatur (5, 5a) überschritten wird, **dadurch gekennzeichnet,**
   **dass** der Regler (4) die Leistungsabgabe des planbar einsetzbaren Wärmeerzeugers (2) während der Beladung so regelt, dass sich die ihm zugeordnete örtlich-gemittelte Temperatur (5, 5a) nicht verändert, also dass die Ableitung nach der Zeit Null ist.

**2.** Verfahren zum Regeln eines Wärmeversorgungssystems nach Anspruch 1, **dadurch gekennzeichnet,**

a) **dass** die zeitliche Änderung der örtlich-gemittelten Temperatur (5, 5a) bei ausgeschaltetem planbar einsetzbaren Wärmeerzeuger (2) kontinuierlich erfasst und mithilfe eines einstellbaren Parameters in eine thermische Leistung umgerechnet wird und
b) **dass** bei Vorliegen der Einschaltbedingung die Beladung durch den planbar einsetzbaren Wärmeerzeuger (2, 6) mit der gleichen thermischen Leistung gestartet wird und
c) **dass** der Regler (4) die Leistungsabgabe des planbar einsetzbaren Wärmeerzeugers (2) während der Beladung so regelt, dass sich die ihm zugeordnete örtlich-gemittelte Temperatur (5, 5a) nicht verändert, also dass die Ableitung nach der Zeit Null ist.

**3.** Verfahren zum Regeln eines Wärmeversorgungssystems nach Anspruch 1 oder 2, **dadurch gekennzeichnet, dass** die Beladung mit dem planbar einsetzbaren Wärmeerzeuger (2) noch vor Erreichen des Ausschalt-Sollwerts durch die zugeordnete örtlich-gemittelte Temperatur (5, 5a) beendet wird, wenn die Eintrittstemperatur in den Wärmespeicher oder die örtlich-gemittelte Temperatur (5b) des fluktuierenden Wärmeerzeugers (6) den Einschalt-Sollwert überschreitet.

**4.** Verfahren zum Regeln eines Wärmeversorgungssystems nach einem der vorhergehenden Ansprüche, **dadurch gekennzeichnet, dass** trotz Unterschreitens des Einschalt-Sollwerts durch die örtlich-gemittelte Temperatur (5a) des planbar einsetzbaren Wärmeerzeugers die Beladung ausgesetzt wird, solange der in die Zukunft extrapolierte (prognostizierte) örtlich-gemittelte Temperaturverlauf (5b) des fluktuierenden Wärmeerzeugers (6) eine einstellbare Temperaturgrenze vorher erreicht als der prognostizierte örtlich-gemittelte Temperaturverlauf (5a) des planbar einsetzbaren Wärmeerzeugers (2).

**5.** Verfahren zum Regeln eines Wärmeversorgungssystems nach Anspruch 4, **dadurch gekennzeichnet, dass** die Regelung (4) die Temperaturgrenze selbsttätig abhängig vom prognostizierten Verlauf der Leistung des Wärmebedarfs sowie des fluktuierenden Wärmeerzeugers zwischen Einschalt-Sollwert und Einstellwert der Temperaturgrenze variiert.

**6.** Verfahren zum Regeln eines Wärmeversorgungssystems nach einem der vorhergehenden Ansprüche, **dadurch gekennzeichnet, dass** trotz Unterschreitens des Einschalt-Sollwerts durch die örtlich-gemittelte Temperatur (5a) des planbar einsetzbaren Wärmeerzeugers (2) die Beladung ausgesetzt wird, wenn
erstens die örtlich-gemittelte Temperatur des fluktuierenden Wärmeerzeugers die Temperaturgrenze überschritten hat und
zweitens die Steigung der örtlich-gemittelten Temperatur (5b) des fluktuierenden Wärmeerzeugers (6) größer als Null ist, und
drittens die örtlich-gemittelte Temperatur (5a), die dem planbar einsetzbaren Wärmeerzeuger zugeordnet ist, noch nicht die Temperaturgrenze unterschritten hat.

**7.** Verfahren nach einem der vorhergehenden Ansprüche, **dadurch gekennzeichnet,**

a) **dass** in der Regelung (4) ein Parameter für die Umrechnung der örtlich-gemittelten Temperatur in eine gespeicherte Wärme vorhanden ist,
b) **dass** die zugeführten Wärmeleistungen der Wärmeerzeuger (2, 6) gemessen werden,
c) **dass** die Wärmeabgabeleistung an die Verbraucher aus der Differenz zwischen den zugeführten Wärmeleistungen und der zeitlichen Ableitung der gespeicherten Wärme im Speicher berechnet wird, um daraus eine zeitliche Prognose des Lastgangs abzuleiten, und c) dass die Nachheizung unterdrückt wird, wenn kein Wärmebedarf prognostiziert wird und die Temperaturgrenze noch nicht unterschritten wurde.

**8.** Wärmeversorgungssystem mit einem Wärmespeicher (1), mit mindestens einem Wärmeverbraucher, mit mindestens einem fluktuierenden Wärmeerzeuger (6), mit mindestens einem planbar einsetzbaren Wärmeerzeuger (2), mit einer Regelung (4), an den mindestens ein örtlich-mittelnder Speichertemperatursensor (5, 5a, 5b) angeschlossen ist, wobei die Beladung mit dem planbar einsetzbaren Wärmeerzeuger (2) gestartet wird, wenn der Einschalt-Sollwert von der zugeordneten örtlich-gemittelten Temperatur (5, 5a) unterschritten wird und beendet wird, wenn der Ausschalt-Sollwert von der zugeordneten örtlich-gemittelten Temperatur (5, 5a) überschritten wird, **dadurch gekennzeichnet,** a) dass der Regler (4) die Leistungsabgabe des planbar einsetzbaren Wärmeerzeugers (2) während der Beladung so regelt, dass sich die ihm zugeordnete örtlich-gemittelte Temperatur (5, 5a) nicht verändert, also dass die Ableitung nach der Zeit Null ist.

Figur 1 (Stand der Technik)

Figur 2

Figur 3

Figur 4

Figur 5

Figur 6

Figur 7

**Europäisches Patentamt**
**European Patent Office**
**Office européen des brevets**

# EUROPÄISCHER RECHERCHENBERICHT

**Nummer der Anmeldung**

EP 19 00 0105

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 199 691 A2 (VIESSMANN WERKE KG [DE]) 23. Juni 2010 (2010-06-23) * Absätze [0017], [0088], [0091] * * Abbildungen 1,2A,2B * ----- | 1-8 | INV. G05D23/19 F24H9/20 |
| X | DE 30 05 553 A1 (AICHNER GEB ZIMMETATIS [IT]) 20. August 1981 (1981-08-20) * Ansprüche 1-5 * * Abbildungen 1-5 * ----- | 1-8 | |

**RECHERCHIERTE SACHGEBIETE (IPC)**

G05D

Der vorliegende Recherchenbericht wurde für alle Patentansprüche erstellt

| Recherchenort | Abschlußdatum der Recherche | Prüfer |
|---|---|---|
| München | 19. Juli 2019 | Pöllmann, H |

**ANHANG ZUM EUROPÄISCHEN RECHERCHENBERICHT
ÜBER DIE EUROPÄISCHE PATENTANMELDUNG NR.**

EP 19 00 0105

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2019

| Im Recherchenbericht angeführtes Patentdokument | Datum der Veröffentlichung | Mitglied(er) der Patentfamilie | Datum der Veröffentlichung |
|---|---|---|---|
| EP 2199691 A2 | 23-06-2010 | DE 102008063860 A1<br>EP 2199691 A2<br>ES 2709396 T3 | 01-07-2010<br>23-06-2010<br>16-04-2019 |
| DE 3005553 A1 | 20-08-1981 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8805160 A1
- DE 102005001379
- US 6592254 B
- DE 091926191
- DE 3843233 C2

- EP 3214420 A
- US 2015285690 A
- US 2013173205 A
- EP 2715298 A